(19) **Europäisches Patentamt**
**European Patent Office**
**Office européen des brevets**

(11) **EP 4 611 279 A1**

(12) **EUROPEAN PATENT APPLICATION**
published in accordance with Art. 153(4) EPC

(43) Date of publication:
**03.09.2025 Bulletin 2025/36**

(21) Application number: **23887470.5**

(22) Date of filing: **27.06.2023**

(51) International Patent Classification (IPC):
**H04B 10/11** (2013.01)      **H04N 13/194** (2018.01)

(52) Cooperative Patent Classification (CPC):
**H04B 10/11; H04B 10/25;** H04N 13/194

(86) International application number:
**PCT/CN2023/102753**

(87) International publication number:
**WO 2024/098773 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 CN 202211406003**

(71) Applicant: **Huawei Technologies Co., Ltd.
Shenzhen, Guangdong 518129 (CN)**

(72) Inventors:
• LIU, Hui
  **Shenzhen, Guangdong 518129 (CN)**
• ZENG, Yan
  **Shenzhen, Guangdong 518129 (CN)**
• WANG, Xiang
  **Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD, APPARATUS AND SYSTEM, AND STORAGE MEDIUM**

(57)     This application relates to the communication field, and discloses a communication method, apparatus, and system, and a storage medium. The method is applied to a first device in the communication system, where the communication system further includes a mobile device, and the mobile device includes a plurality of communication units. The method includes: The first device converts to-be-sent first data into a first spatial optical signal; the first device determines a first communication unit of the mobile device from the plurality of communication units, where the first communication unit is located within a spatial light illumination range of the first device; and the first device sends the first spatial optical signal to the first communication unit. This application can meet a requirement of an application scenario of a high transmission rate on a communication rate and enable the mobile device to have mobility.

FIG. 8

## Description

This application claims priority to Chinese Patent Application No. 202211406003.6, filed with the China National Intellectual Property Administration on November 10, 2022 and entitled "COMMUNICATION METHOD, APPARATUS, AND SYSTEM, AND STORAGE MEDIUM", which is incorporated herein by reference in its entirety.

## TECHNICAL FIELD

This application relates to the communication field, and in particular, to a communication method, apparatus, and system, and a storage medium.

## BACKGROUND

In an application scenario of a high transmission rate, a server is required to transmit a large amount of data to a mobile device in real time, and the mobile device is required to have mobility to move.

However, a current communication manner between the server and the mobile device cannot meet a requirement of the application scenario on a communication rate and cannot enable the mobile device to have mobility.

## SUMMARY

This application provides a communication method, apparatus, and system, and a storage medium, to meet a requirement of an application scenario of a high transmission rate on a communication rate and enable a mobile device to have mobility. The technical solutions are as follows.

According to a first aspect, this application provides a communication method. The method is applied to a first device in a communication system, the communication system further includes a mobile device, and the mobile device includes a plurality of communication units. In the method, the first device converts to-be-sent first data into a first spatial optical signal. The first device determines a first communication unit of the mobile device from the plurality of communication units, where the first communication unit is located within a spatial light illumination range of the first device. The first device sends the first spatial optical signal to the first communication unit.

The mobile device includes the plurality of communication units, so that at least one communication unit in the plurality of communication units can be located within the spatial light illumination range of the first device. Therefore, the first device can determine, from the plurality of communication units, the first communication unit that is of the mobile device and that is located within the spatial light illumination range. The first device sends the first spatial optical signal to the first communication unit. A communication bandwidth and a communication rate of the spatial optical signal are high, so that a requirement of an application scenario of a high transmission rate on a communication rate is met, and the mobile device is enabled to have mobility.

In a possible implementation, the first device converts the first data into a second spatial optical signal. The first device performs beam modulation on the second spatial optical signal to obtain the first spatial optical signal, where a spot size of the first spatial optical signal is within a spot size range of a spatial optical signal that can be received by the mobile device. The spot size of the first spatial optical signal is modulated within the spot size range, to prevent the spot size of the first spatial optical signal from being excessively large or excessively small, so that a loss of the first spatial optical signal during receiving by the mobile device is reduced.

In another possible implementation, the first device obtains a position of at least one second communication unit in the plurality of communication units. The first device selects, from the at least one second communication unit based on the position of the at least one second communication unit, the first communication unit located within the spatial light illumination range. Based on the position of the at least one second communication unit, the first communication unit located within the spatial light illumination range can be accurately selected, to ensure that the first spatial optical signal can be successfully sent to the first communication unit.

In another possible implementation, the mobile device is provided with a mark for identifying a communication unit, the at least one second communication unit includes a communication unit on a first surface, and the first surface is a surface that is of the mobile device and that faces the first device. The first device obtains a first picture, where the first picture is obtained by photographing the mobile device located within the spatial light illumination range, and the first picture includes an image of a mark for identifying the at least one second communication unit. The first device obtains the position of the at least one second communication unit based on the image of the mark of the at least one second communication unit. Because the first picture is obtained by photographing the mobile device located within the spatial light illumination range, the position of the second communication unit can be accurately obtained based on the image that is of the mark of the second communication unit and that is in the first picture.

In another possible implementation, the first device receives position and posture information of the mobile device. The first device obtains the position of the at least one second communication unit based on the position and posture information of the mobile device. Because the first device can obtain the position and posture information of the mobile device, the position of the at least one second communication unit can be accurately obtained based on the position and posture information.

In another possible implementation, the first device receives the position that is of the at least one second communication unit and that is sent by the mobile device. The first device receives the position of the at least one second communication unit, so that the first device does not need to actively calculate the position of the at least one second communication unit. Therefore, an operation amount of the first device can be reduced.

In another possible implementation, the at least one second communication unit is a communication unit that is on the mobile device and that is located within the spatial light illumination range. In this way, a quantity of communication units that need to be sent can be reduced, so that communication resources can be saved.

In another possible implementation, the first spatial optical signal is a spatial laser signal.

According to a second aspect, this application provides a communication method. The method is applied to a mobile device in a communication system, the communication system further includes a first device, and the mobile device includes a plurality of communication units. In the method, the mobile device receives a first spatial optical signal by using a first communication unit in the plurality of communication units, where the first spatial optical signal is obtained by converting to-be-sent first data by the first device, and the first communication unit is located within a spatial light illumination range of the first device. The mobile device converts the first spatial optical signal into the first data.

The mobile device includes the plurality of communication units, so that at least one communication unit in the plurality of communication units can be located within the spatial light illumination range of the first device. In addition, the at least one communication unit includes the first communication unit, so that the mobile device can receive the first spatial optical signal by using the first communication unit. A communication bandwidth and a communication rate of the spatial optical signal are high, so that a requirement of an application scenario of a high transmission rate on a communication rate is met, and the mobile device is enabled to have mobility.

In a possible implementation, the mobile device obtains position and posture information of the mobile device. The mobile device sends the position and posture information of the mobile device to the first device, where the position and posture information of the mobile device are used for enabling the first device to determine the first communication unit. Because the position and posture information of the mobile device is sent to the first device, the first device can accurately select, based on the position and posture information, the first communication unit located within the spatial light illumination range.

In another possible implementation, the mobile device obtains the position and posture information of the mobile device. The mobile device obtains a position of at least one second communication unit in the plurality of communication units based on the position and posture information of the mobile device. The mobile device sends the position of the at least one second communication unit to the first device, where the position of the at least one second communication unit is used for enabling the first device to select, from the at least one second communication unit, the first communication unit located within the spatial light illumination range. The position of the at least one second communication unit is sent to the first device, so that the first device does not need to actively calculate the position of the at least one second device. Therefore, an operation amount of the first device can be reduced.

In another possible implementation, the at least one second communication unit is located within the spatial light illumination range. In this way, a quantity of communication units that need to be sent can be reduced, so that communication resources can be saved.

In another possible implementation, the mobile device is provided with a mark for identifying a communication unit. In this way, the first device accurately obtains the position of the communication unit by using the mark of the communication unit.

In another possible implementation, the first spatial optical signal is a spatial laser signal.

In another possible implementation, the mobile device further includes a signal convergence component, and the signal convergence component is connected to the plurality of communication units. The mobile device converts the first spatial optical signal into the first data by using the signal convergence component. Because the signal convergence component is connected to the plurality of communication units, a spatial optical signal received by any communication unit is obtained by using the signal convergence component, and the spatial optical signal received by any communication unit can be converted into data.

In another possible implementation, the plurality of communication units are a plurality of photoelectric detector PD arrays, the first communication unit is a first PD array, and the plurality of PD arrays include the first PD array. The mobile device receives the first spatial optical signal by using the first PD array. The mobile device converts the first spatial optical signal into an electrical signal by using the first PD array. The mobile device obtains, by using the signal convergence component, the electrical signal converted by using the first PD array. The mobile device converts the obtained electrical signal into the first data. An area of the first PD array is large, so that during receiving of the first spatial optical signal by using the first PD array, the first spatial optical signal can be completely received or a loss that is of the first spatial optical signal and that is generated during the receiving is reduced. The first PD array can convert the first spatial optical signal into an electrical signal, so that the mobile device can convert the electrical signal into the first data.

In another possible implementation, the first communication unit includes a scanning component, a beam transformer, and a photoelectric detection part.

The beam transformer is connected to the scanning component and the photoelectric detection part, and the photoelectric detection part is further connected to the signal convergence component. The mobile device receives the first spatial optical signal by using the scanning component. The mobile device converts, into an optical fiber signal by using the beam transformer, the first spatial optical signal received by using the scanning component. The mobile device converts, into an electrical signal by using the photoelectric detection part, the optical fiber signal converted by using the beam transformer. The mobile device obtains, by using the signal convergence component, the electrical signal converted by using the photoelectric detection part. The mobile device converts the obtained electrical signal into the first data.

An area of the scanning component is large, so that during receiving of the first spatial optical signal by using the scanning component, the first spatial optical signal can be completely received or a loss that is of the first spatial optical signal and that is generated during the receiving is reduced. The beam transformer can convert the received first spatial optical signal into the optical fiber signal. The photoelectric detection part converts the optical fiber signal into the electrical signal, so that the mobile device can convert the electrical signal into the first data.

In another possible implementation, the first communication unit includes a scanning component and a beam transformer, the mobile device further includes a photoelectric detection part, the beam transformer is connected to the scanning component and the signal convergence component, and the signal convergence component is further connected to the photoelectric detection part. The mobile device receives the first spatial optical signal by using the scanning component. The mobile device converts, into an optical fiber signal by using the beam transformer, the first spatial optical signal received by using the scanning component. The mobile device transmits, to the photoelectric detection part by using the signal convergence component, the optical fiber signal converted by using the beam transformer. The mobile device converts the optical fiber signal into an electrical signal by using the photoelectric detection part. The mobile device converts, into the first data, the electrical signal converted by using the photoelectric detection part.

An area of the scanning component is large, so that during receiving of the first spatial optical signal by using the scanning component, the first spatial optical signal can be completely received or a loss that is of the first spatial optical signal and that is generated during the receiving is reduced. The beam transformer can convert the received first spatial optical signal into the optical fiber signal. The photoelectric detection part converts the optical fiber signal into the electrical signal, so that the mobile device can convert the electrical signal into the first data.

According to a third aspect, this application provides a communication apparatus, configured to perform the method according to any one of the first aspect or the possible implementations of the first aspect. Specifically, the apparatus includes units configured to perform the method according to any one of the first aspect or the possible implementations of the first aspect.

According to a fourth aspect, this application provides a communication apparatus, configured to perform the method according to any one of the second aspect or the possible implementations of the second aspect. Specifically, the apparatus includes units configured to perform the method according to any one of the second aspect or the possible implementations of the second aspect.

According to a fifth aspect, this application provides a first device, including a transceiver unit and at least one processor. The at least one processor is configured to execute instructions, and implement the method according to any one of the first aspect or the possible implementations of the first aspect by using the transceiver unit.

In a possible implementation, the first device further includes a memory, and the at least one processor is coupled to the memory and reads the instructions stored in the memory.

According to a sixth aspect, this application provides a mobile device, including a transceiver unit and at least one processor. The at least one processor is configured to execute instructions, and implement the method according to any one of the second aspect or the possible implementations of the second aspect by using the transceiver unit.

In a possible implementation, the mobile device further includes a memory, and the at least one processor is coupled to the memory and reads instructions stored in the memory.

According to a seventh aspect, this application provides a computer program product. The computer program product includes a computer program stored in a computer-readable storage medium, and the computer program is loaded by a processor to implement the method according to any one of the first aspect, the second aspect, the possible implementations in the first aspect, or the possible implementations in the second aspect.

According to an eighth aspect, this application provides a computer-readable storage medium, configured to store a computer program. The computer program is loaded by a processor to perform the method according to any one of the first aspect, the second aspect, the possible implementations in the first aspect, or the possible implementations in the second aspect.

According to a ninth aspect, this application provides a chip, including a memory and a processor. The memory is configured to store computer instructions, and the processor is configured to invoke the computer instructions from the memory and run the computer instructions, to perform the method according to any one of the first aspect, the second aspect, the possible implementations in the first aspect, or the possible implementations in the second aspect.

According to a tenth aspect, this application provides a communication system. The system includes the apparatus according to the third aspect and the apparatus according to the fourth aspect, or the system includes the first device according to the fifth aspect and the mobile device according to the sixth aspect.

BRIEF DESCRIPTION OF DRAWINGS

FIG. 1 is a diagram of a structure of a communication system according to an embodiment of this application;

FIG. 2 is a diagram of a structure of another communication system according to an embodiment of this application;

FIG. 3 is a diagram of a structure of another communication system according to an embodiment of this application;

FIG. 4 is a diagram of a structure of another communication system according to an embodiment of this application;

FIG. 5 is a diagram of a structure of a mobile device according to an embodiment of this application;

FIG. 6 is a diagram of a structure of another mobile device according to an embodiment of this application;

FIG. 7 is a diagram of a structure of another mobile device according to an embodiment of this application;

FIG. 8 is a flowchart of a communication method according to an embodiment of this application;

FIG. 9 is a diagram of a structure of a communication apparatus according to an embodiment of this application;

FIG. 10 is a diagram of a structure of another communication apparatus according to an embodiment of this application;

FIG. 11 is a diagram of a structure of a device according to an embodiment of this application;

FIG. 12 is a diagram of a structure of another device according to an embodiment of this application; and

FIG. 13 is a diagram of a structure of a communication system according to an embodiment of this application.

DESCRIPTION OF EMBODIMENTS

The following further describes in detail embodiments of this application with reference to accompanying drawings.

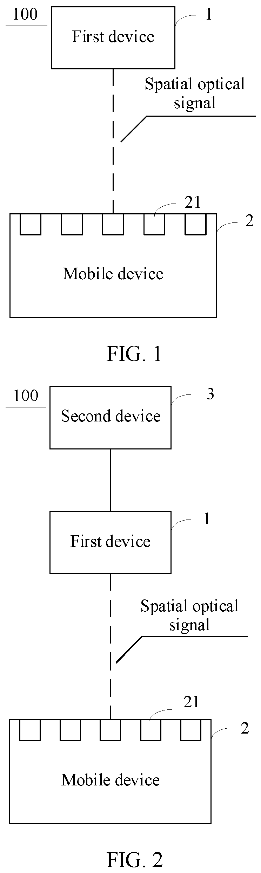

Refer to FIG. 1. An embodiment of this application provides a communication system 100. The communication system 100 is applied to an application scenario of a high transmission rate, and includes a first device 1 and a mobile device 2. The mobile device 2 includes a plurality of communication units 21.

The first device 1 is configured to convert to-besent first data into a first spatial optical signal, determine a first communication unit of the mobile device 2 from the plurality of communication units 21, where the first communication unit is located within a spatial light illumination range of the first device 1, and send the first spatial optical signal to the first communication unit.

The mobile device 2 is configured to receive the first spatial optical signal by using the first communication unit, and convert the first spatial optical signal into the first data.

The first communication unit is a part of communication units in the plurality of communication units 21. In other words, the first communication unit may include one communication unit, or may include a plurality of communication units.

The plurality of communication units 21 are distributed on the mobile device 2, so that when the mobile device 2 is in any position or posture, at least one communication unit on the mobile device 2 is located within the spatial light illumination range of the first device 1. Optionally, the plurality of communication units 21 are evenly disposed on the mobile device 2.

In the application scenario of the high transmission rate, a very high communication bandwidth and communication rate are required between the first device 1 and the mobile device 2. The first device 1 may need to send a large amount of data to the mobile device 2 in real time. In addition, the mobile device 2 is required to be mobile and have mobility.

For example, the application scenario of the high transmission rate may be an extended reality (extended reality, XR) application scenario. In the XR application scenario, the first device 1 may be a server, and the mobile device 2 may be an XR device. In the XR scenario, immersive experience is required to be achieved. Therefore, in the XR application scenario, the server is required to transmit a large amount of video data to the XR device in real time, and the XR device is required to have mobility and be mobile.

In some embodiments, the first spatial optical signal may be a spatial laser signal. The spatial laser signal may be an invisible optical signal, a visible optical signal, or the like. For example, the spatial laser signal may be an invisible optical signal like an infrared optical signal or a near-infrared optical signal. The XR application scenario includes one or more of the following: an augmented reality (augmented reality, AR) application scenario, a virtual reality (virtual reality, VR) application scenario, a mixed reality (mixed reality, MR) application scenario, or the like. The mobile device may be an AR device, a VR device, an MR device, or the like.

Refer to FIG. 2. The communication system 100 may further include a second device 3. The first device 1 communicates with the second device 3, and the first device 1 is configured to receive first data sent by the second device 3.

In some embodiments, the second device 3 may be a server, a terminal, or the like, the first device 1 may be an access point (access point, AP) or the like, and the mobile device 2 may be a wearable device, for example, the mobile device 2 is a mobile helmet, mobile glasses, or the like.

In some embodiments, the first device 1 and the second device 3 are integrated into one device, and the first device 1 is a transmit part of the second device 3. For example, the second device 3 may be a server, a terminal, or the like, and the first device 1 is a transmit part of the server or the terminal.

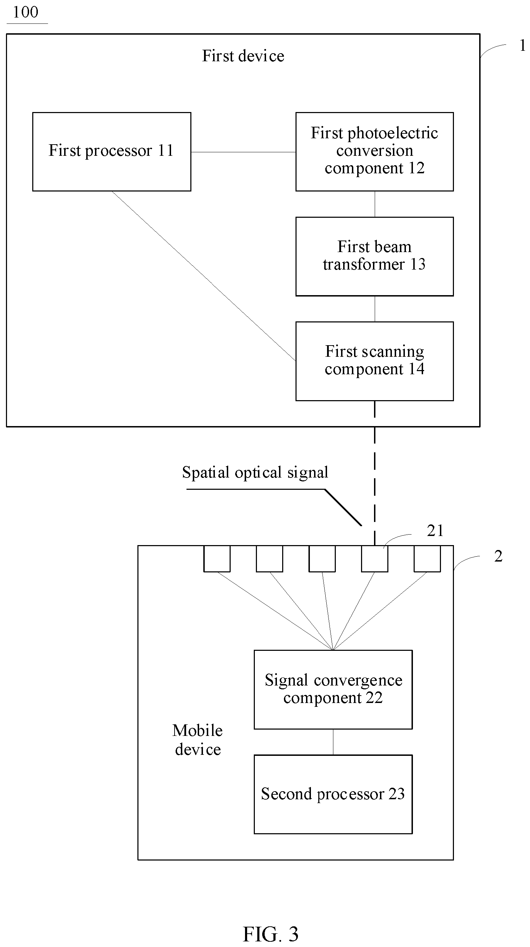

Refer to an example of the first device 1 shown in FIG. 3. A structure of the first device 1 is described in detail in the example. Certainly, the structure of the first device 1 may alternatively be another structure. This is not described in detail herein.

The first device 1 includes a first processor 11, a first photoelectric conversion component 12, a first beam transformer 13, and a first scanning component 14. The first beam transformer 13 is separately connected to the first photoelectric conversion component 12 and the first scanning component 14. The first processor 11 is connected to the first photoelectric conversion component 12 and the first scanning component 14.

The first processor 11 is configured to input to-be-sent first data to the first photoelectric conversion component 12, obtain, based on a position of the first communication unit of the mobile device 2, a transmitting angle for transmitting the first spatial optical signal, and input the transmitting angle to the first scanning component 14.

The first photoelectric conversion component 12 is configured to receive the first data, convert the first data into a second spatial optical signal, and input the second spatial optical signal to the first beam transformer 13.

The first beam transformer 13 is configured to receive the second spatial optical signal, perform beam modulation on the second spatial optical signal to obtain the first spatial optical signal. A spot size of the first spatial optical signal is within a spot size range of a spatial optical signal that can be received by the mobile device 2, and input the first spatial optical signal to the first scanning component 14.

The first scanning component 14 is configured to receive the first spatial optical signal and the transmitting angle, and send the first spatial optical signal to the first communication unit based on the transmitting angle. Alternatively,

the first photoelectric conversion component 12 is configured to receive the first data, convert the first data into an optical fiber signal, and input the optical fiber signal to the first beam transformer 13.

The first beam transformer 13 is configured to receive the optical fiber signal, perform beam modulation on the optical fiber signal to obtain the first spatial optical signal. A spot size of the first spatial optical signal is within a spot size range of a spatial optical signal that can be received by the mobile device 2, and input the first spatial optical signal to the first scanning component 14.

The first scanning component 14 is configured to receive the first spatial optical signal and the transmitting angle, and send the first spatial optical signal to the first communication unit based on the transmitting angle.

In some embodiments, the to-be-sent first data may be a digital signal. The first processor 11 converts the digital signal into an electrical signal, and inputs the electrical signal to the first photoelectric conversion component 12. The to-be-sent first data may be data generated by the first processor 11, or may be data received by the first processor 11 from the second device 3.

In some embodiments, the first beam transformer 13 may be a lens, a lens group, a liquid crystal converter, a metasurface converter, or the like.

When the spot size of the first spatial optical signal is large, a divergence angle of the first spatial optical signal is also large, and an area of the first spatial optical signal irradiated on the mobile device 2 is large. Consequently, a loss that is of the first spatial optical signal and that is generated during receiving is increased. When the spot size of the first spatial optical signal is small, a divergence angle of the first spatial optical signal is also large during transmission of the first spatial optical signal. As a result, an area of the first spatial optical signal irradiated on the mobile device 2 is also large. Consequently, a loss that is of the first spatial optical signal and that is generated during receiving is increased. Therefore, the first beam transformer 13 obtains the first spatial optical signal whose the spot size is within the spot size range, so that the divergence angle of the first spatial optical signal can be reduced, and the loss that is of the first spatial optical signal and that is generated during receiving is reduced.

The spot size range is related to a wavelength of the first spatial optical signal, and first spatial optical signals with different wavelengths may correspond to different spot size ranges. For example, the spot size of the first spatial optical signal sent by the first device 1 should be greater than or equal to $w1$, and less than or equal to $w2$. In other words, the spot size range is a range greater than or equal to $w1$ and less than or equal to $w2$.

$$\begin{cases} w1 = \dfrac{w^2 - \sqrt{w^4 - 4k^2}}{2} \\ w2 = \dfrac{w^2 + \sqrt{w^4 - 4k^2}}{2} \\ k = \dfrac{z\lambda}{\pi} \end{cases}.$$

In the foregoing formula, $\lambda$ is the wavelength of the first spatial optical signal, $Z$ is a distance between the first device 1 and the mobile device 2, and $W$ is a spot size threshold. When the spot size of the first spatial optical signal sent by the first device 1 is within the range greater than or equal to $w1$ and less than or equal to $w2$, the spot size of the first spatial optical signal arriving at the mobile device 2 does not exceed the spot size threshold.

In some embodiments, the first scanning component 14 may be a mechanical deflection mirror, a liquid crystal beam deflector, a metasurface beam deflector, or the like, and can deflect the first spatial optical signal to the first communication unit of the mobile device 2.

A transmitting angle of the first scanning component 14 is variable, and may change within a specified angle range, so that the first scanning component 14 can generate a spatial light illumination range. For any communication unit located within the spatial light illumination range, the first scanning component 14 may send a spatial optical signal to the communication unit. Optionally, the specified angle range includes an angle range in a horizontal direction and an angle range in a vertical direction. In other words, the transmitting angle of the first scanning component 14 may change within the angle range in the horizontal direction and/or within the angle range in the vertical direction.

In some embodiments, the first processor 11 is further configured to obtain a position of at least one second communication unit in the plurality of communication units 21; and select, from the at least one second communication unit based on the position of the at least one second communication unit, the first communication unit located within the spatial light illumination range of the first device 1.

The following lists the following three manners of obtaining the position of the at least one second communication unit. Certainly, in addition to the foregoing three manners, there may be another manner. This is not described in detail herein.

Manner 1: The mobile device 2 is provided with a mark used for the communication unit 21. The first processor 11 is further configured to obtain a first picture, where the first picture is obtained by photographing the mobile device 2 located within the spatial light illumination range of the first device 1, and the first picture includes an image of a mark of the at least one second communication unit; and obtain the position of the at least one second communication unit based on the image of the mark of the at least one second communication unit.

In some embodiments, the mobile device 2 is provided with a mark for identifying each communication unit 21. Optionally, the marks of the communication units 21 may be the same or may be different.

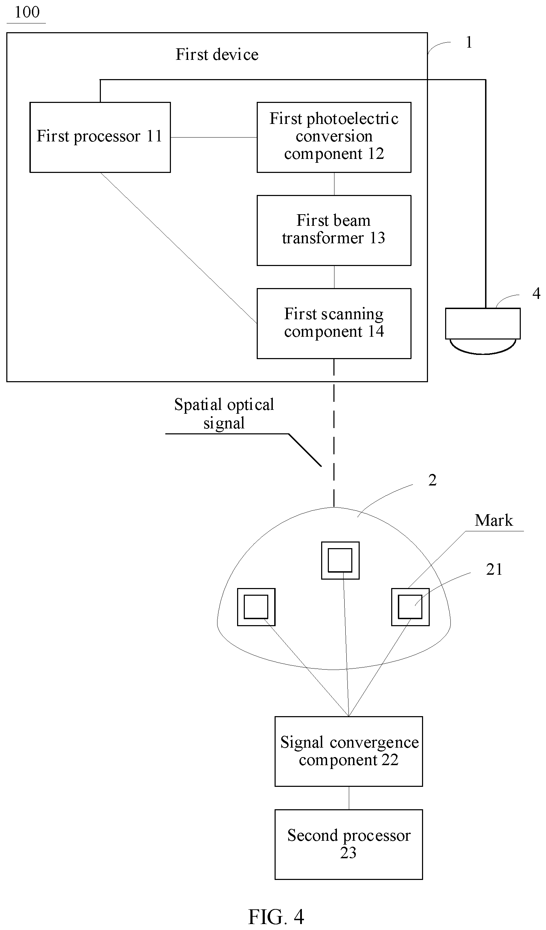

Refer to FIG. 4. The communication system 100 further includes a camera 4, the first processor 11 communicates with the camera 4, and the mobile device 2 is provided with a mark for identifying each communication unit 21. The first processor 11 is configured to photograph, by using the camera 4, the mobile device 2 located within the spatial light illumination range, to obtain a first picture. The first picture includes an image of a mark for identifying the at least one second communication unit, the at least one second communication unit includes a communication unit on a first surface, and the first surface is a surface that is of the mobile device 2 and that faces the first device 1.

The first device 1 includes a coordinate system corresponding to the first picture, and a coordinate origin of the coordinate system may be a position of the camera 4. The first device 1 further includes a position of the first scanning component 14 in the coordinate system. The first processor 11 locates a position of the at least one second communication unit in the coordinate system based on the image that is of the mark of the at least one second communication unit and that is in the first picture. Alternatively,

the first device 1 includes a coordinate system corresponding to the first picture, and a coordinate origin of the coordinate system may be a position of the first scanning component 14. The first device 1 further includes a position of the camera 4 in the coordinate system. The first processor 11 locates a position of the at least one second communication unit in the coordinate system based on the position of the camera 4 and the image that is of the mark of the at least one second communication unit and that is in the first picture.

Refer to FIG. 4. The mobile device 2 is provided with an enclosure mark corresponding to any communication unit. The enclosure mark may be a light-emitting lamp or a reflective object, or may be a colored enclosure image disposed on the mobile device 2, or the like. Optionally, the light-emitting lamp may be a light-emitting diode (light-emitting diode, LED) or the like, a material of the reflective object may be reflective paper or the like, and the colored enclosure image may be a yellow enclosure image, a blue enclosure image, or the like.

Manner 2: The first processor 11 obtains position and posture information of the mobile device 2, and obtains the position of the at least one second communication unit based on the position and posture information of the mobile device 2.

The at least one second communication unit may be all communication units on the mobile device, or may be a communication unit that is on the mobile device and that is located within the spatial light illumination range.

The mobile device 2 may include a position sensor and a posture sensor (not shown in the figure). The position of the mobile device 2 is collected by using the position sensor, and the posture information of the mobile device 2 is collected by using the posture sensor. Optionally, the position sensor may be a positioning system like a global positioning system (global positioning system, GPS) or BeiDou, and the posture sensor may be a gyroscope or the like.

Manner 3: The first processor 11 obtains the position that is of the at least one second communication unit and that is sent by the mobile device 2.

The mobile device 2 may collect position and posture information of the mobile device 2, and obtain, based on the position and posture information, a position of a communication unit included in the mobile device 2. The at least one second communication unit is all communication units included in the mobile device 2. Alternatively, the at least one second communication unit is a communication unit located within the spatial light illumination range.

Refer to the mobile device 2 shown in FIG. 3. The mobile device 2 further includes a signal convergence component 22 and a second processor 23. The plurality of communication units 21 are connected to the signal convergence component 22, and the signal convergence component 22 is further connected to the second processor 23.

The second processor 23 is configured to convert, by using the signal convergence component 22, the first spatial optical signal received by the first communication unit into the first data.

The following lists the following three structures of the mobile device 2. Certainly, in addition to the foregoing three structures, there may be another structure of the mobile device 2. This is not described in detail herein.

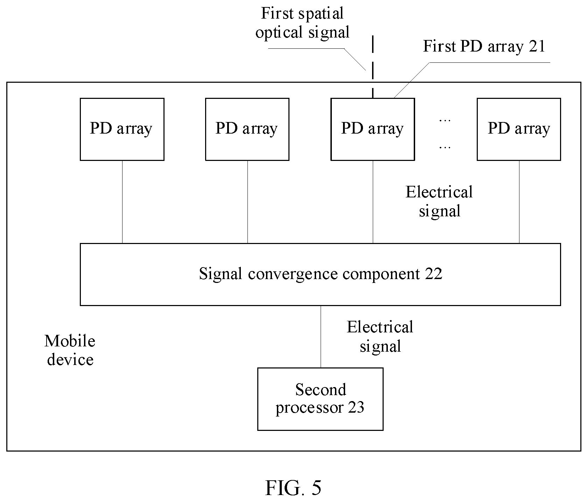

In a first structure, refer to FIG. 5. The plurality of communication units 21 are a plurality of photoelectric detector (photoelectric detector, PD) arrays, the first communication unit is a first PD array 21, and the plurality of PD arrays include the first PD array 21.

The first PD array 21 is configured to receive a first spatial optical signal, convert the first spatial optical signal into an electrical signal, and input the electrical signal to the second processor 23 by using the signal convergence component 22.

The second processor 23 is configured to receive the electrical signal, and convert the electrical signal into first data. The first data is a digital signal.

The first PD array 21 includes a plurality of PDs, so that the first PD array has a sufficient area to receive the first spatial optical signal, to reduce a loss of the first spatial optical signal.

In the first structure, the signal convergence component 22 may be a combiner or the like.

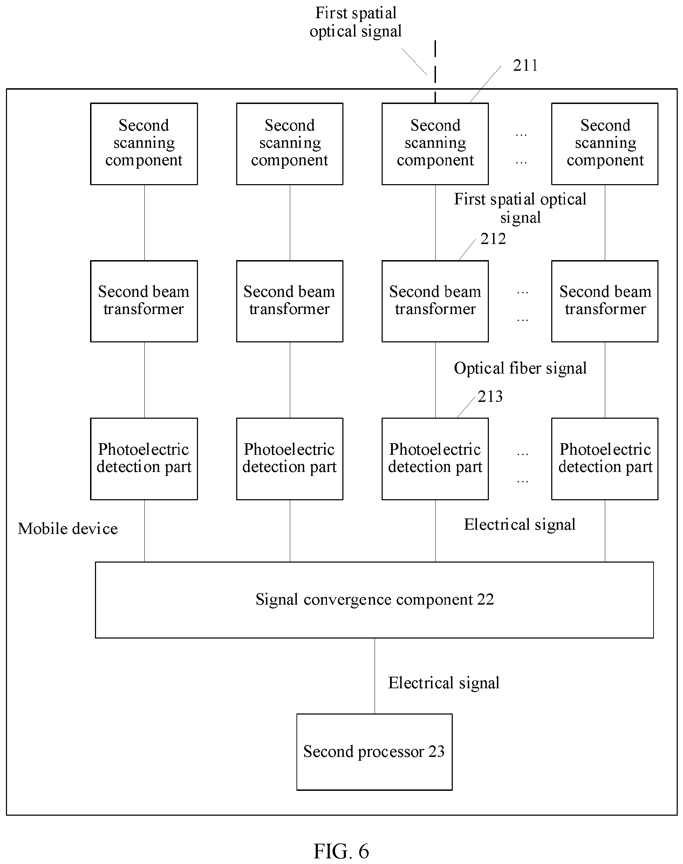

In a second manner, refer to FIG. 6. The first communication unit includes a second scanning component 211, a second beam transformer 212, and a photoelectric detection part 213. The second beam transformer 212 is connected to the second scanning component 211 and the photoelectric detection part 213, the photoelectric detection part 213 is further connected to the signal convergence component 22, and the signal convergence component 22 is further connected to the second processor 23.

The second scanning component 211 is configured to receive a first spatial optical signal, and input the first spatial optical signal to the second beam transformer 212.

The second beam transformer 212 is configured to receive the first spatial optical signal, convert the first spatial optical signal into an optical fiber signal, and input the optical fiber signal to the photoelectric detection part 213.

The photoelectric detection part 213 is configured to receive the optical fiber signal, convert the optical fiber signal into an electrical signal, and input the electrical signal to the second processor 23 by using the signal convergence component 22.

The second processor 23 is configured to receive the electrical signal, and convert the electrical signal into first data. The first data is a digital signal.

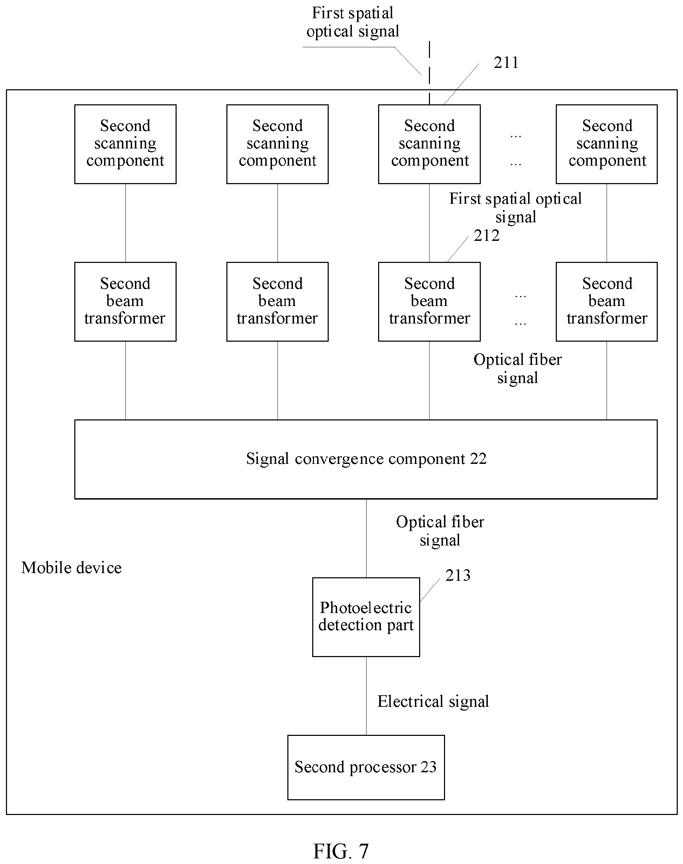

In a third manner, refer to FIG. 7. The first communication unit includes a second scanning component 211 and a second beam transformer 212. The mobile device 2 further includes a photoelectric detection part 213. The second beam transformer 212 is connected to the second scanning component 211 and the signal convergence component 22, the signal convergence component 22 is further connected to the photoelectric detection part 213, and the photoelectric detection part 213 is further connected to the second processor 23.

The second scanning component 211 is configured to receive a first spatial optical signal, and input the first spatial optical signal to the second beam transformer 212.

The second beam transformer 212 is configured to receive the first spatial optical signal, convert the first spatial optical signal into an optical fiber signal, and transmit the optical fiber signal to the photoelectric detection part 213 by using the signal convergence component 22.

The photoelectric detection part 213 is configured to receive the optical fiber signal, convert the optical fiber signal into an electrical signal, and input the electrical signal to the second processor 23.

The second processor 23 is configured to receive the electrical signal, and convert the electrical signal into first data. The first data is a digital signal.

In the second structure or the third structure, the signal convergence component 22 may be a combiner, a multiplexer, or the like.

In the second structure, the second beam transformer 212 may be connected to the photoelectric detection part 213 through an optical fiber. Alternatively, in the third structure, the second beam transformer 212 may be connected to the signal convergence component 22 through an optical fiber, and the signal convergence component 22 may be connected to the photoelectric detection part 213 through an optical fiber. After receiving the first spatial optical signal, the second scanning component 211 adjusts an angle of incidence of the first spatial optical signal, and the first spatial optical signal is irradiated on the second beam transformer 212 based on the adjusted angle of incidence. The second beam transformer 212 converts the first spatial optical signal into the optical fiber signal, and couples the optical fiber signal to an optical fiber, where the optical fiber is an optical fiber connected to the second beam transformer 212 (the optical fiber between the second beam transformer 212 and the photoelectric detection part 213 or the optical fiber between the second beam transformer 212 and the signal convergence component 22)]

In some embodiments, the second beam transformer 212 may be a lens, and the first spatial optical signal whose angle of incidence is adjusted is parallel or approximately parallel to an axis of the lens. For example, the second beam transformer 212 may be a reflective liquid crystal converter, and the first spatial optical signal whose angle of incidence is adjusted is parallel or approximately parallel to a reflection axis of the reflective liquid crystal converter; or the second beam transformer 212 may be a transmissive liquid crystal converter, and the first spatial optical signal whose angle of incidence is adjusted is parallel or approximately parallel to a transmissive axis of the transmissive liquid crystal converter.

In some embodiments, the second beam transformer 212 may be a metasurface converter, and the first spatial optical signal whose angle of incidence is adjusted is parallel or approximately parallel to a reflection axis of the metasurface converter.

After the second scanning component 211 adjusts the angle of incidence of the first spatial optical signal, the first spatial optical signal is irradiated on the second beam transformer at an optimal angle of incidence. In this way, highest coupling efficiency can be achieved, to reduce a loss of the signal.

A size of the second scanning component 211 should be greater than the spot size of the first spatial optical signal arriving at the mobile device 2, to ensure that the first spatial optical signal can be completely received or received with a low loss.

In the second structure or the third structure, the optical fiber may be a single-mode optical fiber, and the photoelectric detection part 213 is a PD. To be specific, a single PD may be used to receive an optical fiber signal through the optical fiber. If the optical fiber is the single-mode optical fiber, because a diameter of the single-mode optical fiber is small (for example, the diameter of the single-mode optical fiber is usually 9 $\mu$m), the single PD may be used to receive an optical fiber signal through the optical fiber.

In the second structure or the third structure, the optical fiber may be a multi-mode optical fiber, and the photoelectric detection part 213 is a small PD array including a plurality of PDs. To be specific, the small PD array including the plurality of PDs may be used to receive an optical fiber signal through the optical fiber. If the optical fiber is the multi-mode optical fiber, because a diameter of the multi-mode optical fiber is large (for example, a diameter of the multi-mode optical fiber is usually 50 $\mu$m or 62.5 $\mu$m), using the single PD cannot receive all optical fiber signals through the optical fiber. Therefore, the small PD array including the plurality of PDs is used to receive an optical fiber signal through the multi-mode optical fiber.

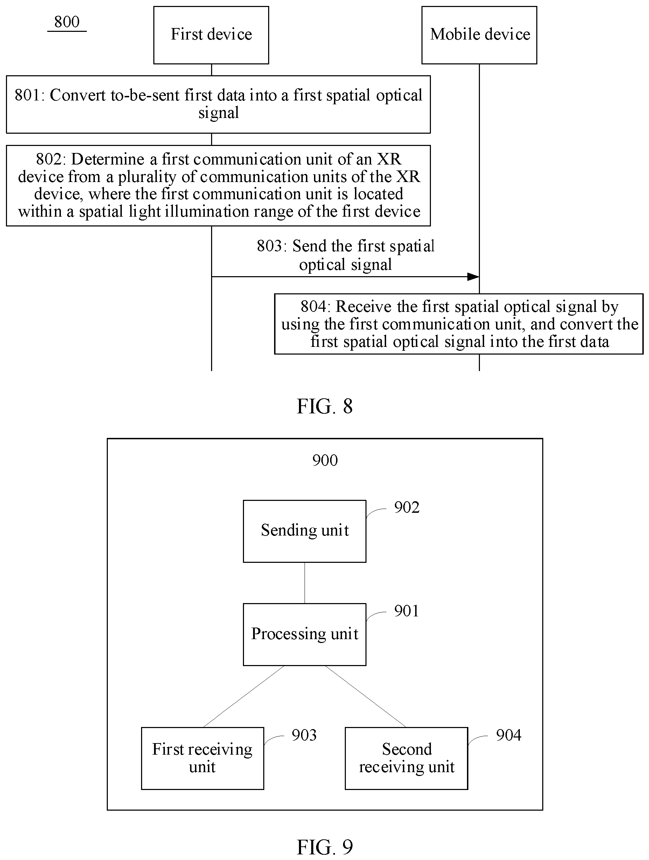

Refer to FIG. 8. An embodiment of this application provides a communication method 800. The communication method 800 is applied to the communication system 100 shown in FIG. 1, FIG. 2, FIG. 3, or FIG. 4. The communication method 800 includes the following process of step 801 to step 804.

Step 801: A first device converts to-be-sent first data into a first spatial optical signal.

The first data may be data received by the first device from the second device, or the first data may be data generated by the first device. The first data may include one or more pieces of the following data: video data, audio data, a picture, text, or the like.

In step 801, the first device converts the first data into a second spatial optical signal, and performs beam modulation on the second spatial optical signal to obtain the first spatial optical signal whose spot size is within a spot size range, where the spot size range is a spot size range of a spatial optical signal that can be received by a mobile device. Alternatively, the first device converts the first data into an optical fiber signal, and performs beam modulation on the optical fiber signal to obtain the first spatial optical signal whose spot size is within a spot size range.

Refer to FIG. 3. The first device includes a first photoelectric conversion component, a first beam transformer, and a first scanning component. In step 801, the first device may convert the to-be-sent first data into the second spatial optical signal by using the first photoelectric conversion component, input the second spatial optical signal to the first beam transformer, perform beam modulation on the second spatial optical signal by using the first beam transformer, to obtain the first spatial optical signal whose spot size is within the spot size range, and input the first spatial optical signal to the first scanning component. Alternatively,
the first device may convert the to-be-sent first data into an optical fiber signal by using the first photoelectric conversion component, input the optical fiber signal to the first beam transformer, perform beam modulation on the optical fiber signal by using the second beam transformer, to obtain the first spatial optical signal whose spot size is within the spot size range, and input the first spatial optical signal to the first scanning component.

Step 802: The first device determines a first communication unit of the mobile device from a plurality of communication units of the mobile device, where the first communication unit is located within a spatial light illumination range of the first device.

In step 802, the first device obtains a position of at least one second communication unit in the plurality of communication units of the mobile device, and selects, from the at least one second communication unit based on the position of the at least one second communication unit, the first communication unit located within the spatial light illumination range of the first device.

In step 802, the first device may obtain the position of the at least one second communication unit in the following three manners. Certainly, in addition to the three manners, the first device may use another manner. This is not described in detail herein.

Manner 1: The mobile device is provided with a mark for identifying a communication unit. The first device obtains a first picture, where the first picture is obtained by photographing the mobile device located within the spatial light illumination range of the first device, the first picture includes an image of a mark for identifying the at least one second communication unit, the at least one second communication unit includes a communication unit on a first surface, and the first surface is a surface that is of the mobile device and that faces the first device; and obtains the position of the at least one second communication unit based on the image of the mark of the at least one second communication unit.

Refer to FIG. 4. The first device photographs, by using the camera, the mobile device located within the spatial light illumination range, to obtain the first picture.

In some embodiments, the first device is close to the camera. A transmitting angle at which the first device transmits a spatial optical signal may change within a specified angle range, and a photographing angle of the camera also changes within the specified angle range. In this way, for any signal transmitting direction of the first device, the camera may turn a photographing direction to be consistent with the signal transmitting direction. Similarly, for any photographing direction of the camera, the first device may also turn the signal transmitting direction to be consistent with the photographing direction. Therefore, in step 802, if the camera can photograph the mobile device, it indicates that the first device turns to the signal transmitting direction, to enable the mobile device to be located in the signal transmitting direction of the first device, so that it can be learned that the mobile device is located within the spatial light illumination range of the first device.

In some embodiments, the first device includes a coordinate system corresponding to the first picture, and a coordinate origin of the coordinate system may be a position of the camera. The first device stores a position of the first device in the coordinate system. In Manner 1, the first device locates a position of the at least one second communication unit in the coordinate system based on the image that is of the mark of the at least one second communication unit and that is in the first picture, and locates a position of the mobile device 2. The first device may further obtain a distance between the first scanning component 14 and the mobile device 2 based on the position of the first device and the position of the mobile device 2, and determine the spatial light illumination range of the first device 1 based on the specified angle range and the distance.

In some embodiments, the first device includes a coordinate system corresponding to the first picture, and a coordinate origin of the coordinate system may be a position of the first device. The first device further stores a position of the camera in the coordinate system. In Manner 1, the first device locates a position of the at least one second communication unit in the coordinate system based on the position of the camera and the image that is of the mark of the at least one second communication unit and that is in the first picture, and locates a position of the mobile device 2. The first device may further obtain a distance between the first scanning component 14 and the mobile device 2 based on the position of the mobile device 2, and determine the spatial light illumination range of the first device 1 based on the specified angle range and the distance.

The first device includes the first scanning component, the position of the first device is equivalent to a position of the first scanning component, and the first device is configured to send a spatial optical signal to the mobile device by using the first scanning component.

Refer to FIG. 4. The mobile device is provided with an enclosure mark corresponding to any communication unit. The enclosure mark may be a light-emitting lamp or a reflective object, or may be a colored enclosure image disposed on the mobile device. In this way, the first device may identify, from the first picture, an image of a mark corresponding to the communication unit.

Manner 2: The first device receives position and posture information of the mobile device, and obtains the position of the at least one second communication unit based on the position and posture information of the mobile device.

The at least one second communication unit may be all communication units on the mobile device, or may be a communication unit that is on the mobile device and that is located within the spatial light illumination range.

The mobile device may include a position sensor and a posture sensor. The position of the mobile device may be collected by using the position sensor, and the posture information of the mobile device may be collected by using the posture sensor. The position and posture information of the mobile device are sent to the first device.

In Manner 2, the first device includes a position of the first device. A distance between the first device and the mobile device is obtained based on the position of the first device and the position of the mobile device, and the spatial light illumination range of the first device is obtained based on a specified angle range and the distance.

In some embodiments, a wireless connection is established between the first device and the mobile device, and the mobile device sends the position and posture information of the mobile device to the first device through the wireless connection. For example, a wireless fidelity (wireless fidelity, Wi-Fi) connection is established between the first device and the mobile device, and the mobile device sends the position and posture information of the mobile device to the first device through the Wi-Fi connection. For another example, a cellular communication connection is established between the first device and the mobile device, and the mobile device sends the position and posture information of the mobile device to the first device through the cellular communication connection. A communication technology used for the cellular communication connection may be 4G, 5G, or the like.

Manner 3: The first device receives the position that is of the at least one second communication unit and that is sent by the mobile device.

In some embodiments, the mobile device may collect the position and posture information of the mobile device, and obtain positions of all communication units based on the position and posture information. The at least one second communication unit is all the communication units. The mobile device alternatively sends the position of the at least one second communication unit and the position of the mobile device to the first device.

The first device receives the position of the at least one second communication unit and the position of the mobile device, obtains a distance between the first device and the mobile device based on the position of the first device and the position of the mobile device, and obtains the spatial light illumination range of the first device based on a specified angle range and the distance.

In some embodiments, the mobile device stores the position of the first device and the specified angle range. The mobile device may collect the position and posture information of the mobile device, obtain the positions of all the communication units based on the position and posture information, obtain the distance between the first device and the mobile device based on the position of the first device and the position of the mobile device, obtain the spatial light illumination range of the first device based on the distance and the specified angle range, and obtain, based on the positions of all the communication units, at least one second communication unit located within the spatial light illumination range. The mobile device alternatively sends the position of the at least one second communication unit to the first device.

The mobile device may alternatively send the position of the mobile device or the spatial light illumination range to the first device. The first device receives the position of the mobile device or the spatial light illumination range. If the first device receives the position of the mobile device, the first device obtains the distance between the first device and the mobile device based on the position of the first device and the position of the mobile device, and obtains the spatial light illumination range of the first device based on the distance and the specified angle range.

In some embodiments, a wireless connection is established between the first device and the mobile device, and the mobile device sends the position of the at least one second communication unit to the first device through the wireless connection. For example, a Wi-Fi connection is established between the first device and the mobile device, and the mobile device sends the position of the at least one second communication unit to the first device through the Wi-Fi connection. For another example, a cellular communication connection is established between the first device and the mobile device, and the mobile device sends the position of the at least one second communication unit to the first device through the cellular communication connection]

After the position of the at least one second communication unit and the spatial light illumination range of the first device are obtained based on the foregoing Manner 1, Manner 2, or Manner 3, the first device may select the first communication unit from the at least one second communication unit. During implementation, the first device determines, based on the position of the at least one second communication unit, communication units located within the spatial light illumination range of the first device, and selects one or more communication units from the communication units located within the spatial light illumination range of the first device as the first communication unit.

In some embodiments, the first device may randomly select one or more communication units from the communication units located within the spatial light illumination range of the first device as the first communication unit. Alternatively,

in some embodiments, for any communication unit located within the spatial light illumination range of the first device, the first device may determine, based on a position of the communication unit and the position of the first device, a transmitting path of a spatial optical signal sent by the first device to the communication unit, and obtain an included angle between the transmitting path and an axis of incidence of the communication unit. According to the foregoing process, an included angle corresponding to each communication unit located within the spatial light illumination range of the first device may be obtained, and a communication unit with a smallest included angle is selected as the first communication unit. Alternatively, one or more communication units with an included angle less than an included angle threshold are selected as the first communication unit.

The spatial optical signal sent by the first device is transmitted in a straight line, the transmitting path of the spatial optical signal is a straight-line path, and the transmitting path is a straight line between the first device and the first communication unit. A smaller included angle between the transmitting path of the spatial optical signal and an axis of incidence of the first communication unit indicates a smaller loss of the spatial optical signal during receiving by the first communication unit. Therefore, the first communication unit is the communication unit with the smallest included angle between the axis of incidence and the transmitting path, or the first communication unit is the one or more communication units with the included angle between the axis of incidence and the transmitting path less than the included angle threshold, so that the loss of the spatial optical signal during receiving by the first communication unit can be reduced.

An execution sequence of step 801 and step 802 is not limited, and step 801 and step 802 may be performed at the same time. To be specific, when the first device obtains the first data, the first device converts the first data into the first spatial optical signal through step 801, and determines the first communication unit of the mobile device through step 802. Alternatively, step 801 may be performed before step 802. To be specific, when the first device obtains the first data, the first device first converts the first data into the first spatial optical signal through step 801, and then determines the first communication unit of the mobile device through step 802. Alternatively, step 802 may be performed before step 801. To be specific, when the first device obtains the first data, the first device first determines the first communication unit of the mobile device through step 802, and then converts the first data into the first spatial optical signal through step 801.

Step 803: The first device sends the first spatial optical signal to the first communication unit of the mobile device.

In step 803, the first device obtains, based on a position of the first communication unit of the mobile device, a transmitting angle for transmitting a spatial optical signal, adjusts, based on the transmitting angle, a transmitting angle at which the first scanning component sends the spatial optical signal to the first communication unit, and sends the first spatial optical signal to the first communication unit of the mobile device based on an adjusted transmitting angle by using the first scanning component.

Step 804: The mobile device receives the first spatial optical signal by using the first communication unit, and converts the first spatial optical signal into the first data.

The mobile device includes a signal convergence component, and the signal convergence component is connected to the plurality of communication units. In step 804, the mobile device converts the first spatial optical signal into the first data by using the signal convergence component.

The following lists three manners in which the mobile device converts the first spatial optical signal into the first data. Certainly, the mobile device may alternatively convert the first spatial optical signal into the first data in another manner. This is not described in detail herein.

In a first manner, refer to FIG. 5. The plurality of communication units on the mobile device are a plurality of PD arrays, the first communication unit is a first PD array, and the plurality of PD arrays include the first PD array.

The mobile device receives the first spatial optical signal by using the first PD array, converts the first spatial optical signal into an electrical signal, obtains, by using the signal convergence component, the electrical signal converted by using the first PD array, and converts the obtained electrical signal into the first data. The first data is a digital signal.

The first PD array includes a plurality of PDs, so that the first PD array has a sufficient area to receive the first spatial optical signal, to reduce a loss of the first spatial optical signal.

In a second manner, refer to FIG. 6. The first communication unit includes a second scanning component, a second beam transformer, and a photoelectric detection part. The second beam transformer is connected to the second scanning component and the photoelectric detection part, and the photoelectric detection part is further connected to the signal convergence component.

The mobile device receives the first spatial optical signal by using the second scanning component, and inputs the first spatial optical signal to the second beam transformer; converts the first spatial optical signal into an optical fiber signal by using the second beam transformer, and inputs the optical fiber signal to the photoelectric detection part; converts the optical fiber signal into an electrical signal by using the photoelectric detection part; obtains, by using the signal convergence component, the electrical signal converted by using the photoelectric detection part; and converts the obtained electrical signal into the first data. The first data is a digital signal.

In a third manner, refer to FIG. 7. The first communication unit includes a second scanning component and a second beam transformer. The mobile device further includes a photoelectric detection part. The second beam transformer is connected to the second scanning component and the signal convergence component, the signal convergence component is further connected to the photoelectric detection part, and the photoelectric detection part is further connected to a second processor.

The mobile device receives the first spatial optical signal by using the second scanning component, and inputs the first spatial optical signal to the second beam transformer; converts the first spatial optical signal into an optical fiber signal by using the second beam transformer, and transmits the optical fiber signal to the photoelectric detection part by using the signal convergence component; converts the optical fiber signal into an electrical signal by using the photoelectric detection part; and converts the electrical signal converted by using the photoelectric detection part into the first data. The first data is a digital signal.

When the first data is video data or audio data, the mobile device may play the first data. When the first data is a picture or text, the mobile device may display the first data.

In this embodiment of this application, the mobile device includes the plurality of communication units, so that at least one communication unit in the plurality of communication units can be located within the spatial light illumination range of the first device. Therefore, when obtaining the first data, the first device obtains the position of the at least one second communication unit in the plurality of communication units, and selects, from the at least one second communication unit based on the position of the at least one second communication unit, the first communication unit located within the spatial light illumination range. The first device sends the first spatial optical signal to the first communication unit. A communication bandwidth and a communication rate of the spatial optical signal are high, so that a requirement of immersive experience in a mobile scenario on a communication rate is met. The plurality of communication units are distributed on the mobile device, so that when the mobile device is in any position and posture, the first device can select, from the plurality of communication units of the mobile device, the first communication unit located within the spatial light illumination range. In other words, when the mobile device is in any position and posture, the first device can successfully send the spatial optical signal to the mobile device, to ensure normal communication between the first device and the mobile device, so that the mobile device has mobility.

Refer to FIG. 9. An embodiment of this application provides a communication apparatus 900. The apparatus 900 is an apparatus in a communication system. The communication system further includes a mobile device, and the mobile device includes a plurality of communication units. Optionally, the communication system is the communication system 100 shown in FIG. 1, FIG. 2, FIG. 3, or FIG. 4, and the apparatus 900 is deployed on a first device in the communication system 100 or a first device in the method 800 shown in FIG. 8. The apparatus 900 includes:

a processing unit 901, configured to convert to-be-sent first data into a first spatial optical signal, where the processing unit 901 is further configured to determine a first communication unit of the mobile device from the plurality of communication units, where the first communication unit is located within a spatial light illumination range of the apparatus 900; and
a sending unit 902, configured to send the first spatial optical signal to the first communication unit.

Optionally, for a detailed implementation process in which the processing unit 901 converts the first data into the first spatial optical signal, reference may be made to the related content in step 801 of the method 800 shown in FIG. 8. Details are not described herein again.
Optionally, for a detailed implementation process in which the processing unit 901 determines the first communication unit of the mobile device, reference may be made to the related content in step 802 of the method 800 shown in FIG. 8. Details are not described herein again.
Optionally, for a detailed implementation process in which the sending unit 902 sends the first spatial optical signal, reference may be made to the related content in step 803 of the method 800 shown in FIG. 8. Details are not described herein again.
Optionally, the processing unit 901 is configured to:

convert the first data into a second spatial optical signal; and
perform beam modulation on the second spatial optical signal to obtain the first spatial optical signal, where a spot size of the first spatial optical signal is within a spot size range of a spatial optical signal that can be received by the mobile device.

Optionally, for a detailed implementation process in which the processing unit 901 converts the first data into the second spatial optical signal, reference may be made to the related content in step 801 of the method 800 shown in FIG. 8. Details are not described herein again.
Optionally, for a detailed implementation process in which the processing unit 901 performs beam modulation on the second spatial optical signal, reference may be made to the related content in step 801 of the method 800 shown in FIG. 8. Details are not described herein again.
Optionally, the processing unit 901 is configured to:

obtain a position of at least one second communication unit in the plurality of communication units; and
select, from the at least one second communication unit based on the position of the at least one second communication unit, the first communication unit located within the spatial light illumination range.

Optionally, for a detailed implementation process in which the processing unit 901 obtains the position of the at least one second communication unit, reference may be made to the related content in step 802 of the method 800 shown in FIG. 8. Details are not described herein again.
Optionally, for a detailed implementation process in which the processing unit 901 selects the first communication unit located within the spatial light illumination range, reference may be made to the related content in step 802 of the method 800 shown in FIG. 8. Details are not described herein again.
Optionally, the mobile device is provided with a mark for identifying a communication unit, the at least one second communication unit includes a communication unit on a first surface, and the first surface is a surface that is of the mobile device and that faces the first device.
The processing unit 901 is configured to:

obtain a first picture, where the first picture is obtained by photographing the mobile device located within the spatial light illumination range, and the first picture includes an image of a mark for identifying the at least one second communication unit; and obtain the position of the at least one second communication unit based on the image of the mark of the at least one second communication unit.

Optionally, for a detailed implementation process in which the processing unit 901 obtains the first picture, reference may be made to the content of Manner 1 in step 802 of the method 800 shown in FIG. 8. Details are not described herein again.

Optionally, for a detailed implementation process in which the processing unit 901 obtains the position of the at least one second communication unit, reference may be made to the content of Manner 1 in step 802 of the method 800 shown in FIG. 8. Details are not described herein again.

Optionally, the apparatus 900 further includes a first receiving unit 903.

The first receiving unit 903 is further configured to receive position and posture information of the mobile device.

The processing unit 901 is configured to obtain the position of the at least one second communication unit based on the position and posture information of the mobile device.

Optionally, for a detailed implementation process in which the first receiving unit 903 receives the position and posture information of the mobile device, reference may be made to the content of Manner 2 in step 802 of the method 800 shown in FIG. 8. Details are not described herein again.

Optionally, for a detailed implementation process in which the processing unit 901 obtains the position of the at least one second communication unit based on the position and posture information of the mobile device, reference may be made to the content of Manner 2 in step 802 of the method 800 shown in FIG. 8. Details are not described herein again.

Optionally, the apparatus 900 further includes a second receiving unit 904. The second receiving unit 904 is further configured to receive the position that is of the at least one second communication unit and that is sent by the mobile device.

Optionally, the at least one second communication unit is a communication unit that is on the mobile device and that is located within the spatial light illumination range.

Optionally, the first spatial optical signal is a spatial laser signal.

In this embodiment of this application, the mobile device includes the plurality of communication units, so that at least one communication unit in the plurality of communication units can be located within the spatial light illumination range of the apparatus. Therefore, when the first data needs to be sent, the processing unit selects, from the plurality of communication units of the mobile device, the first communication unit located within the spatial light illumination range. The sending unit sends the first spatial optical signal to the first communication unit. A communication bandwidth and a communication rate of the spatial optical signal are high, so that a requirement of immersive experience in a mobile scenario on a communication rate is met. When the mobile device is in any position and posture, the processing unit may select, from the plurality of communication units of the mobile device, the first communication unit located within the spatial light illumination range, so that the mobile device has mobility.

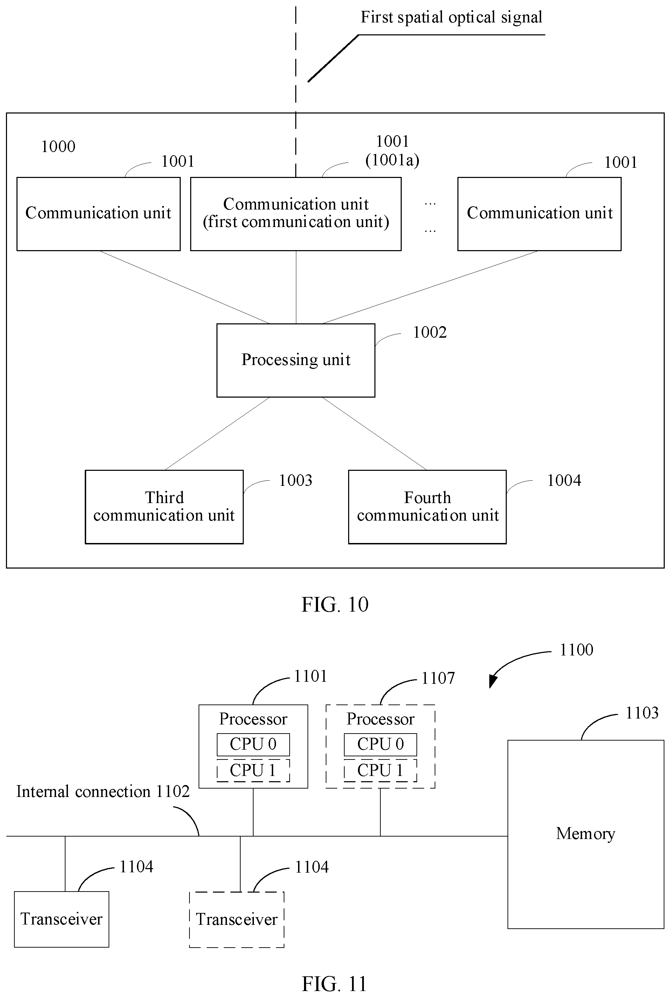

Refer to FIG. 10. An embodiment of this application provides a communication apparatus 1000. The apparatus 1000 is an apparatus in a communication system. The communication system further includes a first device, and the apparatus 1000 includes a plurality of communication units 1001 and a processing unit 1002. Optionally, the communication system is the communication system 100 shown in FIG. 1, FIG. 2, FIG. 3, or FIG. 4. The apparatus 1000 is deployed on a mobile device in the communication system 100, or deployed on the mobile device shown in FIG. 5, FIG. 6, or FIG. 7, or deployed on the mobile device in the method 800 shown in FIG. 8.

A first communication unit 1001a in the plurality of communication units 1001 is configured to receive a first spatial optical signal, where the first spatial optical signal is obtained by converting to-be-sent first data by the first device, and the first communication unit 1001 is located within a spatial light illumination range of the first device.

The processing unit 1002 is configured to convert the first spatial optical signal into the first data.

Optionally, for a detailed implementation process in which the first communication unit 1001a receives the first spatial optical signal, reference may be made to the related content in step 804 of the method 800 shown in FIG. 8. Details are not described herein again.

Optionally, for a detailed implementation process in which the processing unit 1002 converts the first spatial optical signal into the first data, reference may be made to the related content in step 804 of the method 800 shown in FIG. 8. Details are not described herein again.

Optionally, the apparatus 1000 further includes a third communication unit 1003. The third communication unit 1003 is a unit other than the plurality of communication units 1001 in the apparatus 1000.

The processing unit 1002 is further configured to obtain position and posture information of the apparatus 1000.

The third communication unit 1003 is configured to send the position and posture information of the apparatus 1000 to the first device, where the position and posture information of the apparatus 1000 is used for enabling the first device to determine the first communication unit.

Optionally, for a detailed implementation process in which the processing unit 1002 obtains the position and posture information of the apparatus 1000, reference may be made to the related content of Manner 2 in step 802 of the method 800 shown in FIG. 8. Details are not described herein again.

Optionally, for a detailed implementation process in which the third communication unit 1003 sends the position and posture information of the apparatus 1000, reference may be made to the related content of Manner 2 in step 802 of the method 800 shown in FIG. 8. Details are not described herein again.

Optionally, the apparatus 1000 further includes a fourth communication unit 1004. The fourth communication unit 1004 is a unit other than the plurality of communication units 1001 in the apparatus 1000.

The processing unit 1002 is further configured to obtain position and posture information of the apparatus 1000.

The processing unit 1002 is further configured to obtain a position of at least one second communication unit in the plurality of communication units 1001 based on the position and posture information of the apparatus 1000.

The fourth communication unit 1004 is configured to send the position of the at least one second communication unit to the first device, where the position of the at least one second communication unit is used for enabling the first device to select, from the at least one second communication unit, the first communication unit 1001a located within the spatial light illumination range.

Optionally, for a detailed implementation process in which the processing unit 1002 obtains the position and posture information of the apparatus 1000, reference may be made to the related content of Manner 3 in step 802 of the method 800 shown in FIG. 8. Details are not described herein again.

Optionally, for a detailed implementation process in which the processing unit 1002 obtains the position of the at least one second communication unit in the plurality of communication units 1001, reference may be made to the related content of Manner 3 in step 802 of the method 800 shown in FIG. 8. Details are not described herein again.

Optionally, for a detailed implementation process in which the fourth communication unit 1004 sends the position of the at least one second communication unit, reference may be made to the related content of Manner 3 in step 802 of the method 800 shown in FIG. 8. Details are not described herein again.

Optionally, the at least one second communication unit is located within the spatial light illumination range.

Optionally, the apparatus 1000 is provided with a mark for identifying a communication unit.

Optionally, the first spatial optical signal is a spatial laser signal.

Optionally, refer to FIG. 4. The apparatus 1000 further includes a signal convergence component 22, and the signal convergence component 22 is connected to the plurality of communication units.

The processing unit 1002 is configured to convert the first spatial optical signal into the first data by using the signal convergence component 22.

Optionally, refer to FIG. 5. The plurality of communication units are a plurality of photoelectric detector PD arrays, the first communication unit 1001 is a first PD array, and the plurality of PD arrays include the first PD array.

The first PD array is configured to receive the first spatial optical signal.

The first PD array is configured to convert the first spatial optical signal into an electrical signal.

The processing unit 1002 is configured to obtain, by using the signal convergence component, the electrical signal converted by using the first PD array, and convert the obtained electrical signal into the first data.

Optionally, refer to FIG. 6. The first communication unit 1001 includes a scanning component, a beam transformer, and a photoelectric detection part. The beam transformer is connected to the scanning component and the photoelectric detection part, and the photoelectric detection part is further connected to a signal convergence component.

The scanning component is configured to receive the first spatial optical signal.

The beam transformer is configured to convert, into an optical fiber signal, the first spatial optical signal received by using the scanning component.

The photoelectric detection part is configured to convert, into an electrical signal, the optical fiber signal converted by using the beam transformer.

The processing unit 1002 is configured to obtain, by using the signal convergence component, the electrical signal converted by using the photoelectric detection part, and convert the obtained electrical signal into the first data.

Optionally, refer to FIG. 7. The first communication unit 1001 includes a scanning component and a beam transformer. The apparatus 1000 further includes a photoelectric detection part, the beam transformer is connected to the scanning component and a signal convergence component, and the signal convergence component is further connected to the photoelectric detection part.

The scanning component is configured to receive the first spatial optical signal.

The beam transformer is configured to convert, into an optical fiber signal, the first spatial optical signal received by using the scanning component.

The signal convergence component is configured to transmit, to the photoelectric detection part, the optical fiber signal converted by using the beam transformer.

The photoelectric detection part is configured to convert the optical fiber signal into an electrical signal.

The processing unit is configured to convert, into the first data, the electrical signal converted by using the photoelectric detection part.

In this embodiment of this application, the apparatus includes the plurality of communication units, so that at least one communication unit in the plurality of communication units can be located within the spatial light illumination range of the first device. In addition, the at least one communication unit includes the first communication unit, so that the first communication unit can receive the first spatial optical signal sent by the first device, and the processing unit converts the first spatial optical signal into data. Because a communication bandwidth and a communication rate of a spatial optical signal are high, a requirement of immersive experience in a mobile scenario on a communication rate is met. When the apparatus is in any posture and position, at least one of the plurality of communication units is located within the spatial light illumination range of the first device, so that the apparatus has mobility.

FIG. 11 is a diagram of a device 1100 according to an embodiment of this application. The device 1100 may be the first device in any one of the foregoing embodiments. For example, the device 1100 may be the first device in the communication system 100 shown in FIG. 1, FIG. 2, FIG. 3, or FIG. 4, or the first device in the method 800 shown in FIG. 8. The device 1100 includes at least one processor 1101, an internal connection 1102, a memory 1103, and at least one transceiver 1104.

The device 1100 is an apparatus of a hardware structure.

In some embodiments, the device 1100 may be configured to implement function modules in the apparatus 900 in FIG. 9. For example, a person skilled in the art may figure out that the processing unit 901 in the apparatus 900 shown in FIG. 9 may be implemented by invoking code in the memory 1103 by using the at least one processor 1101. The sending unit 902, the first receiving unit 903, and the second receiving unit 904 in the apparatus 900 shown in FIG. 9 may be implemented by using the at least one transceiver 1104. The device 1100 may be further configured to implement a function of the first device in any one of the foregoing embodiments.

Optionally, the processor 1101 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The internal connection 1102 may include a path for transmitting information between the foregoing components. Optionally, the internal connection 1102 is a board, a bus, or the like.

The transceiver 1104 is configured to communicate with another device or a communication network.

The memory 1103 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. This is not limited thereto. The memory may exist independently, and is connected to the processor through the bus. The memory may alternatively be integrated with the processor.

The memory 1103 is configured to store application program code for performing the solutions of this application, and the processor 1101 controls execution of the application program code. The processor 1101 is configured to execute the application program code stored in the memory 1103, and cooperate with the at least one transceiver 1104, so that the device 1100 implements functions in the method in this patent.

In specific implementation, in an embodiment, the processor 1101 may include one or more CPUs, for example, a CPU 0 and a CPU 1 in FIG. 11.

During specific implementation, in an embodiment, the device 1100 may include a plurality of processors, for example, the processor 1101 and a processor 1107 shown in FIG. 11. Each of the processors may be a single-core (single-CPU) processor, or may be a multi-core (multi-CPU) processor. The processor herein may be one or more devices, circuits, and/or processing cores configured to process data (for example, computer program instructions).

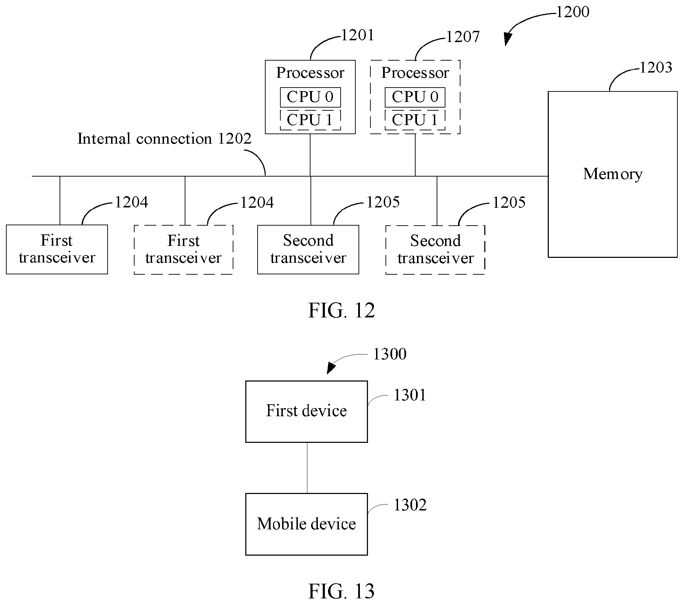

FIG. 12 is a diagram of a device 1200 according to an embodiment of this application. The device 1200 may be the mobile device in any one of the foregoing embodiments. For example, the device 1200 may be the mobile device in the communication system 100 shown in FIG. 1, FIG. 2, FIG. 3, or FIG. 4, or the mobile device shown in FIG. 5, FIG. 6, or FIG. 7, or the mobile device in the method 800 shown in FIG. 8. The device 1200 includes at least one processor 1201, an internal connection 1202, a memory 1203, at least one first transceiver 1204, and at least one second transceiver 1205.

The device 1200 is an apparatus of a hardware structure.

In some embodiments, the device 1200 may be configured to implement function modules in the apparatus 1000 in FIG. 10. For example, a person skilled in the art may figure out that the processing unit 1002 in the apparatus 1000 shown in FIG. 10 may be implemented by invoking code in the memory 1203 by using the at least one processor 1201. At least one communication unit 1001 in the apparatus 1000 shown in FIG. 10 may be implemented by using the at least one first transceiver 1204. The third communication unit 1003 and the fourth communication unit 1004 in the apparatus 1000 shown in FIG. 10 may be implemented by using the at least one second transceiver 1205. The device 1200 may be further configured to implement a function of the mobile device in any one of the foregoing embodiments.

Optionally, the processor 1201 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The internal connection 1202 may include a path for transmitting information between the foregoing components. Optionally, the internal connection 1202 is a board, a bus, or the like.

The transceiver 1204 is configured to communicate with another device or a communication network.

The memory 1203 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. This is not limited thereto. The memory may exist independently, and is connected to the processor through the bus. The memory may alternatively be integrated with the processor.

The memory 1203 is configured to store application program code for performing the solutions of this application, and the processor 1201 controls execution of the application program code. The processor 1201 is configured to execute the application program code stored in the memory 1203, and cooperate with the at least one transceiver 1204, so that the device 1200 implements functions in the method in this patent.

In specific implementation, in an embodiment, the processor 1201 may include one or more CPUs, for example, a CPU 0 and a CPU 1 in FIG. 12.

During specific implementation, in an embodiment, the device 1200 may include a plurality of processors, for example, the processor 1201 and a processor 1207 shown in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 13. An embodiment of this application provides a communication system 1300. The communication system 1300 includes the apparatus 900 shown in FIG. 9 and the apparatus 1000 shown in FIG. 10, or the communication system 1300 includes the apparatus 1100 shown in FIG. 11 and the apparatus 1200 shown in FIG. 12.

The apparatus 900 shown in FIG. 9 or the apparatus 1100 shown in FIG. 11 is a first device 1301, and the apparatus 1000 shown in FIG. 10 or the apparatus 1200 shown in FIG. 12 is a mobile device 1302.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. A communication method, wherein the method is applied to a first device in a communication system, the communication system further comprises a mobile device, the mobile device comprises a plurality of communication units, and the method comprises:

   converting, by the first device, to-be-sent first data into a first spatial optical signal;
   determining, by the first device, a first communication unit of the mobile device from the plurality of communication units, wherein the first communication unit is located within a spatial light illumination range of the first device; and
   sending, by the first device, the first spatial optical signal to the first communication unit.

2. The method according to claim 1, wherein the converting, by the first device, to-be-sent first data into a first spatial optical signal comprises:

   converting, by the first device, the first data into a second spatial optical signal; and
   performing, by the first device, beam modulation on the second spatial optical signal to obtain the first spatial optical signal, wherein a spot size of the first spatial optical signal is within a spot size range of a spatial optical signal that can be received by the mobile device.

3. The method according to claim 1 or 2, wherein the determining, by the first device, a first communication unit of the mobile device from the plurality of communication units comprises:

obtaining, by the first device, a position of at least one second communication unit in the plurality of communication units; and
selecting, from the at least one second communication unit by the first device based on the position of the at least one second communication unit, the first communication unit located within the spatial light illumination range.

4. The method according to claim 3, wherein the mobile device is provided with a mark for identifying a communication unit, the at least one second communication unit comprises a communication unit on a first surface, and the first surface is a surface that is of the mobile device and that faces the first device; and the obtaining, by the first device, a position of at least one second communication unit in the plurality of communication units comprises:

obtaining, by the first device, a first picture, wherein the first picture is obtained by photographing the mobile device located within the spatial light illumination range, and the first picture comprises an image of a mark for identifying the at least one second communication unit; and
obtaining, by the first device, the position of the at least one second communication unit based on the image of the mark of the at least one second communication unit.

5. The method according to claim 3, wherein the obtaining, by the first device, a position of at least one second communication unit in the plurality of communication units comprises:

receiving, by the first device, position and posture information of the mobile device; and
obtaining, by the first device, the position of the at least one second communication unit based on the position and posture information of the mobile device.

6. The method according to claim 3, wherein the obtaining, by the first device, a position of at least one second communication unit in the plurality of communication units comprises:
receiving, by the first device, the position that is of the at least one second communication unit and that is sent by the mobile device.

7. The method according to claim 6, wherein the at least one second communication unit is a communication unit that is on the mobile device and that is located within the spatial light illumination range.

8. The method according to any one of claims 1 to 7, wherein the first spatial optical signal is a spatial laser signal.

9. A communication method, wherein the method is applied to a mobile device in a communication system, the communication system further comprises a first device, the mobile device comprises a plurality of communication units, and the method comprises:

receiving, by the mobile device, a first spatial optical signal by using a first communication unit in the plurality of communication units, wherein the first spatial optical signal is obtained by converting to-be-sent first data by the first device, and the first communication unit is located within a spatial light illumination range of the first device; and
converting, by the mobile device, the first spatial optical signal into the first data.

10. The method according to claim 9, wherein the method further comprises:

obtaining, by the mobile device, position and posture information of the mobile device; and
sending, by the mobile device, the position and posture information of the mobile device to the first device, wherein the position and posture information of the mobile device are used for enabling the first device to determine the first communication unit.

11. The method according to claim 9, wherein the method further comprises:

obtaining, by the mobile device, position and posture information of the mobile device;
obtaining, by the mobile device, a position of at least one second communication unit in the plurality of communication units based on the position and posture information of the mobile device; and
sending, by the mobile device, the position of the at least one second communication unit to the first device, wherein the position of the at least one second communication unit is used for enabling the first device to select, from the at least one second communication unit, the first communication unit located within the spatial light illumination range.

12. The method according to claim 11, wherein the at least one second communication unit is located within the spatial light illumination range.

13. The method according to claim 9, wherein the mobile device is provided with a mark for identifying a communication unit.

14. The method according to any one of claims 9 to 13, wherein the first spatial optical signal is a spatial laser signal.

15. The method according to any one of claims 9 to 14, wherein the mobile device further comprises a signal convergence component, and the signal convergence component is connected to the plurality of communication units; and
the converting, by the mobile device, the first spatial optical signal into the first data comprises:
converting, by the mobile device, the first spatial optical signal into the first data by using the signal convergence component.

16. The method according to claim 15, wherein the plurality of communication units are a plurality of photoelectric detector PD arrays, the first communication unit is a first PD array, and the plurality of PD arrays comprise the first PD array;
the receiving, by the mobile device, a first spatial optical signal by using a first communication unit in the plurality of communication units comprises:

receiving, by the mobile device, the first spatial optical signal by using the first PD array; and
the converting, by the mobile device, the first spatial optical signal into the first data by using the signal convergence component comprises:

converting, by the mobile device, the first spatial optical signal into an electrical signal by using the first PD array;
obtaining, by the mobile device by using the signal convergence component, the electrical signal converted by using the first PD array; and
converting, by the mobile device, the obtained electrical signal into the first data.

17. The method according to claim 15, wherein the first communication unit comprises a scanning component, a beam transformer, and a photoelectric detection part, the beam transformer is connected to the scanning component and the photoelectric detection part, and the photoelectric detection part is further connected to the signal convergence component;
the receiving, by the mobile device, a first spatial optical signal by using a first communication unit in the plurality of communication units comprises:

receiving, by the mobile device, the first spatial optical signal by using the scanning component; and

the converting, by the mobile device, the first spatial optical signal into the first data by using the signal convergence component comprises:

converting, into an optical fiber signal by the mobile device by using the beam transformer, the first spatial optical signal received by using the scanning component;
converting, into an electrical signal by the mobile device by using the photoelectric detection part, the optical fiber signal converted by using the beam transformer;
obtaining, by the mobile device by using the signal convergence component, the electrical signal converted by using the photoelectric detection part; and
converting, by the mobile device, the obtained electrical signal into the first data.

18. The method according to claim 15, wherein the first communication unit comprises a scanning component and a beam transformer, the mobile device further comprises a photoelectric detection part, the beam transformer is connected to the scanning component and the signal convergence component, and the signal convergence component is further connected to the photoelectric detection part;
the receiving, by the mobile device, a first spatial optical signal by using a first communication unit in the plurality of communication units comprises:

receiving, by the mobile device, the first spatial optical signal by using the scanning component; and
the converting, by the mobile device, the first spatial optical signal into the first data by using the signal convergence component comprises:

converting, into an optical fiber signal by the mobile device by using the beam transformer, the first spatial optical signal received by using the scanning component;
transmitting, to the photoelectric detection part by the mobile device by using the signal convergence component, the optical fiber signal converted by using the beam transformer;
converting, by the mobile device, the optical fiber signal into an electrical signal by using the photoelectric detection part; and
converting, into the first data by the mobile device, the electrical signal converted by using the photoelectric detection part.

19. A communication apparatus, wherein the apparatus is an apparatus in a communication system, the communication system further comprises a mobile device, the mobile device comprises a plurality of communication units, and the apparatus comprises:

a processing unit, configured to convert to-be-sent first data into a first spatial optical signal, wherein the processing unit is further configured to determine a first communication unit of the mobile device from the plurality of communication units, wherein the first communication unit is located within a spatial light illumination range of the apparatus; and

a sending unit, configured to send the first spatial optical signal to the first communication unit.

20. The apparatus according to claim 19, wherein the processing unit is configured to:

convert the first data into a second spatial optical signal; and

perform beam modulation on the second spatial optical signal to obtain the first spatial optical signal, wherein a spot size of the first spatial optical signal is within a spot size range of a spatial optical signal that can be received by the mobile device.

21. The apparatus according to claim 19 or 20, wherein the processing unit is configured to:

obtain a position of at least one second communication unit in the plurality of communication units; and

select, from the at least one second communication unit based on the position of the at least one second communication unit, the first communication unit located within the spatial light illumination range.

22. The apparatus according to claim 21, wherein the mobile device is provided with a mark for identifying a communication unit, the at least one second communication unit comprises a communication unit on a first surface, and the first surface is a surface that is of the mobile device and that faces the first device; and the processing unit is configured to:

obtain a first picture, wherein the first picture is obtained by photographing the mobile device located within the spatial light illumination range, and the first picture comprises an image of a mark for identifying the at least one second communication unit; and

obtain the position of the at least one second communication unit based on the image of the mark of the at least one second communication unit.

23. The apparatus according to claim 21, wherein the apparatus further comprises a first receiving unit;

the first receiving unit is configured to receive position and posture information of the mobile device; and

the processing unit is configured to obtain the position of the at least one second communication unit based on the position and posture information of the mobile device.

24. The apparatus according to claim 21, wherein the apparatus further comprises a second receiving unit; and

the second receiving unit is configured to receive the position that is of the at least one second communication unit and that is sent by the mobile device.

25. The apparatus according to claim 24, wherein the at least one second communication unit is a communication unit that is on the mobile device and that is located within the spatial light illumination range.

26. The apparatus according to any one of claims 19 to 25, wherein the first spatial optical signal is a spatial laser signal.

27. A communication apparatus, wherein the apparatus is an apparatus in a communication system, the communication system further comprises a first device, and the apparatus comprises a plurality of communication units and a processing unit;

a first communication unit in the plurality of communication units is configured to receive a first spatial optical signal, wherein the first spatial optical signal is obtained by converting to-be-sent first data by the first device, and the first communication unit is located within a spatial light illumination range of the first device; the processing unit is configured to convert the first spatial optical signal into the first data.

28. The apparatus according to claim 27, wherein the apparatus further comprises a third communication unit, and the third communication unit is a unit other than the plurality of communication units in the apparatus;

the processing unit is further configured to obtain position and posture information of the apparatus; and

the third communication unit is configured to send the position and posture information of the apparatus to the first device, wherein the position and posture information of the apparatus are used for enabling the first device to determine the first communication unit.

**29.** The apparatus according to claim 27, wherein the apparatus further comprises a fourth communication unit, and the fourth communication unit is a unit other than the plurality of communication units in the apparatus;

the processing unit is further configured to obtain position and posture information of the apparatus;

the processing unit is further configured to obtain a position of at least one second communication unit in the plurality of communication units based on the position and posture information of the apparatus; and

the third communication unit is configured to send the position of the at least one second communication unit to the first device, wherein the position of the at least one second communication unit is used for enabling the first device to select, from the at least one second communication unit, the first communication unit located within the spatial light illumination range.

**30.** The apparatus according to claim 29, wherein the at least one second communication unit is located within the spatial light illumination range.

**31.** The apparatus of claim 27, wherein the apparatus is provided with a mark for identifying a communication unit.

**32.** The apparatus according to any one of claims 27 to 31, wherein the first spatial optical signal is a spatial laser signal.

**33.** The apparatus according to any one of claims 27 to 32, wherein the apparatus further comprises a signal convergence component, and the signal convergence component is connected to the plurality of communication units; and

the processing unit is configured to convert the first spatial optical signal into the first data by using the signal convergence component.

**34.** The apparatus according to claim 33, wherein the plurality of communication units are a plurality of photoelectric detector PD arrays, the first communication unit is a first PD array, and the plurality of PD arrays comprise the first PD array;

the first PD array is configured to receive the first spatial optical signal;

the first PD array is configured to convert the first spatial optical signal into an electrical signal; and

the processing unit is configured to obtain, by using the signal convergence component, the electrical signal converted by using the first PD array, and convert the obtained electrical signal into the first data.

**35.** The apparatus according to claim 33, wherein the first communication unit comprises a scanning component, a beam transformer, and a photoelectric detection part, the beam transformer is connected to the scanning component and the photoelectric detection part, and the photoelectric detection part is further connected to the signal convergence component;

the scanning component is configured to receive the first spatial optical signal;

the beam transformer is configured to convert, into an optical fiber signal, the first spatial optical signal received by using the scanning component;

the photoelectric detection part is configured to convert, into an electrical signal, the optical fiber signal converted by using the beam transformer; and

the processing unit is configured to obtain, by using the signal convergence component, the electrical signal converted by using the photoelectric detection part, and convert the obtained electrical signal into the first data.

**36.** The apparatus according to claim 33, wherein the first communication unit comprises a scanning component and a beam transformer, the apparatus further comprises a photoelectric detection part, the beam transformer is connected to the scanning component and the signal convergence component, and the signal convergence component is further connected to the photoelectric detection part;

the scanning component is configured to receive the first spatial optical signal;

the beam transformer is configured to convert, into an optical fiber signal, the first spatial optical signal received by using the scanning component;

the signal convergence component is configured to transmit, to the photoelectric detection part, the optical fiber signal converted by using the beam transformer;

the photoelectric detection part is configured to convert the optical fiber signal into an electrical signal; and

the processing unit is configured to convert, into the first data, the electrical signal converted by using the photoelectric detection part.

**37.** A first device, comprising a transceiver unit and at least one processor, wherein the at least one processor is configured to execute instructions, and implement the method according to any one of claims 1 to 8 by using the transceiver unit.

**38.** A mobile device, comprising a transceiver unit and at least one processor, wherein the at least one processor is configured to execute instructions, and implement the method according to any one of claims 9 to 18 by using the transceiver unit.

**39.** A communication system, wherein the communication system comprises the apparatus according to any one of claims 19 to 26 and the apparatus according to any one of claims 27 to 36, or the system comprises the first device according to claim 37 and the mobile device according to claim 38.

**40.** A computer storage medium, storing a computer program, wherein when the computer program is executed by a processor, the method according to any one of claims 1 to 18 is implemented.

**41.** A computer program product, comprising a computer program, wherein when the computer program is executed by a processor, the method according to any one of claims 1 to 18 is implemented.

FIG. 1

FIG. 2

100

**First device**

1

First processor 11

First photoelectric conversion component 12

First beam transformer 13

First scanning component 14

Spatial optical signal

21

2

Mobile device

Signal convergence component 22

Second processor 23

FIG. 3

100

First device

1

First processor 11 — First photoelectric conversion component 12

First beam transformer 13

First scanning component 14

4

Spatial optical signal

2

Mark

21

Signal convergence component 22

Second processor 23

FIG. 4

FIG. 5

First spatial
optical signal

211

| Second scanning component | Second scanning component | Second scanning component | ... | Second scanning component |

First spatial optical signal

212

| Second beam transformer | Second beam transformer | Second beam transformer | ... | Second beam transformer |

Optical fiber signal

213

| Photoelectric detection part | Photoelectric detection part | Photoelectric detection part | ... | Photoelectric detection part |

Mobile device

Electrical signal

Signal convergence component 22

Electrical signal

Second processor 23

FIG. 6

First spatial
optical signal

211

| Second scanning component | Second scanning component | Second scanning component | ... ... | Second scanning component |

First spatial optical
signal

212

| Second beam transformer | Second beam transformer | Second beam transformer | ... ... | Second beam transformer |

Optical fiber
signal

Signal convergence component 22

Optical fiber
signal

Mobile device

213

Photoelectric
detection part

Electrical signal

Second processor 23

FIG. 7

800

| First device | | Mobile device |

801: Convert to-be-sent first data into a first spatial optical signal

802: Determine a first communication unit of an XR device from a plurality of communication units of the XR device, where the first communication unit is located within a spatial light illumination range of the first device

803: Send the first spatial optical signal

804: Receive the first spatial optical signal by using the first communication unit, and convert the first spatial optical signal into the first data

FIG. 8

900

Sending unit — 902

Processing unit — 901

First receiving unit — 903

Second receiving unit — 904

FIG. 9

First spatial optical signal

1000    1001        1001
(1001a)          1001

| Communication unit | Communication unit (first communication unit) | ... ... | Communication unit |

Processing unit    1002

| Third communication unit | 1003 |
| Fourth communication unit | 1004 |

FIG. 10

1100

1101      1107        1103

| Processor | Processor | | Memory |
| CPU 0 | CPU 0 | | |
| CPU 1 | CPU 1 | | |

Internal connection 1102

1104      1104

| Transceiver | Transceiver |

FIG. 11

1200

1201    1207

Processor    | Processor |

CPU 0    | CPU 0 |

CPU 1    | CPU 1 |

Internal connection 1202

1203

Memory

1204    1204    1205    1205

| First transceiver | | First transceiver | | Second transceiver | | Second transceiver |

FIG. 12

1300

First device    1301

Mobile device    1302

FIG. 13

## INTERNATIONAL SEARCH REPORT

| International application No. |
| --- |
| **PCT/CN2023/102753** |

**A. CLASSIFICATION OF SUBJECT MATTER**

H04B 10/11(2013.01)i; H04N 13/194(2018.01)n

According to International Patent Classification (IPC) or to both national classification and IPC

**B. FIELDS SEARCHED**

Minimum documentation searched (classification system followed by classification symbols)

IPC: H04B, H04N

Documentation searched other than minimum documentation to the extent that such documents are included in the fields searched

Electronic data base consulted during the international search (name of data base and, where practicable, search terms used)

CNABS, CNTXT, CNKI, VEN, ENTXTC: 光, 通信, 空间, 移动, 多个, 接收, 范围, 光斑, 位置, 标记, 标识, 图, 姿态, optical, light, communicat+, space, mobile, multiple, receiv+, range, facula, spot, location, position, ID, identi+, image, picture, gesture

**C. DOCUMENTS CONSIDERED TO BE RELEVANT**

| Category* | Citation of document, with indication, where appropriate, of the relevant passages | Relevant to claim No. |
| --- | --- | --- |
| X | JP 2004235899 A (MICROSIGNAL K. K.) 19 August 2004 (2004-08-19) description, paragraphs [0013]-[0069] | 1-41 |
| A | CN 208369589 U (HENAN INFORMATION CONSULTING DESIGN AND RESEARCH CO., LTD.) 11 January 2019 (2019-01-11) entire document | 1-41 |
| A | CN 106375005 A (CHINA NUCLEAR POWER ENGINEERING CO., LTD. et al.) 01 February 2017 (2017-02-01) entire document | 1-41 |
| A | CN 111865415 A (INFORMATION ENGINEERING UNIVERSITY OF PLA) 30 October 2020 (2020-10-30) entire document | 1-41 |
| A | CN 113438460 A (SHENZHEN XINLIANSHENG OPTOELECTRONICS TECHNOLOGY CO., LTD.) 24 September 2021 (2021-09-24) entire document | 1-41 |

☐ Further documents are listed in the continuation of Box C.   ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **08 September 2023** | **13 September 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

EP 4 611 279 A1

**INTERNATIONAL SEARCH REPORT**
Information on patent family members

International application No.

**PCT/CN2023/102753**

| Patent document cited in search report | | | Publication date (day/month/year) | Patent family member(s) | Publication date (day/month/year) |
|---|---|---|---|---|---|
| JP | 2004235899 | A | 19 August 2004 | None | |
| CN | 208369589 | U | 11 January 2019 | None | |
| CN | 106375005 | A | 01 February 2017 | None | |
| CN | 111865415 | A | 30 October 2020 | None | |
| CN | 113438460 | A | 24 September 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211406003